# EUROPEAN PATENT APPLICATION

(11) **EP 4 831 913 A1**
(43) Date of publication of application: **28.10.2026**
(21) Application number: 25465524.4
(22) Date of filing: 22.04.2025
(51) Int. Cl.: G06T 7/00, G06T 7/11, G06T 7/12

(54) **COMPUTER-IMPLEMENTED METHOD AND A CORRESPONDING DEVICE FOR PRIORITIZING LUMEN CONTOUR ADJUSTMENTS IN ANGIOGRAPHIC IMAGE DATA**

(71) Applicant: Siemens Healthineers AG, 91301 Forchheim (DE)
(72) Inventor: Neumann, Dominik, 91052 Erlangen (DE); Itu, Lucian Mihai, 500294 Brasov (RO); Turcea, Alexandru, 105500 Busteni (RO)
(74) Representative: Siemens Healthineers Patent Attorneys

(57) **Abstract**

Computer-implemented method and a corresponding device for prioritizing lumen contour adjustments in angiographic image data to improve the accuracy of coronary hemodynamic index computation. The method includes receiving angiographic image data, determining a lumen contour through automated or semi-automated segmentation, and identifying candidate portions for editing based on an uncertainty measure or user input. For each candidate portion, an impact score is determined by analyzing multiple contour variations, quantifying the influence of adjustments on the computed coronary hemodynamic index value. The candidates are ranked based on their impact scores, and the prioritized list is presented to the user via a graphical interface for review and potential modification. The invention enables efficient correction of diagnostically relevant areas while minimizing unnecessary adjustments.

## Description

The present invention relates to computer-implemented methods and systems for processing angiographic image data in coronary assessments.

US 2025 / 0 104 228 A1 describes techniques for adjusting or editing segments of a contour of a given lumen segmentation of a portion of coronary arteries.

There is a need to improve processing angiographic image data in coronary assessments, in particular for lumen contour adjustments in a coronary hemodynamic index computation system.

This need is met by the computer-implemented method and a corresponding device for prioritizing lumen contour adjustments in coronary hemodynamic index computations with the features of the independent claims. Further advantageous embodiments of the invention are subject of the dependent claims.

According to the invention, a computer-implemented method for prioritizing lumen contour adjustments in a coronary hemodynamic index computation system, comprises the steps of:
- receiving angiographic image data representing a coronary vessel;
- determining a lumen contour in the angiographic image data based on an automated or semi-automated segmentation;
- determining candidate portions of the lumen contour for editing based on an uncertainty measure associated with the segmentation or based on user input;
- determining an impact score for each candidate portion by analyzing multiple variations of the lumen contour adjustment, wherein the impact score represents the estimated influence of an adjustment of the respective candidate portion on a computed coronary hemodynamic index value of a related variation of the lumen contour adjustment;
- ranking the candidate portions based on their respective impact scores to generate a prioritized list of editing candidates; and
- providing the prioritized list to a user via a graphical user interface for review and potential contour adjustments.

This method helps to detect potential inaccuracies and to prioritize corrections based on their influence on coronary hemodynamic index computations and provides a systematic approach for focusing on the most diagnostically relevant adjustments.

The method enables users to focus their corrections on the most diagnostically relevant areas of a lumen contour. Instead of requiring expert reviewers to manually inspect and refine all uncertain regions, a more efficient approach provides a systematic prioritization of editing candidates based on their potential impact on diagnostic outcomes, particularly on computed coronary hemodynamic index values.

The invention provides a system for impact-aware prioritization of lumen contour adjustments. By ranking candidate editing regions based on their estimated influence on computed coronary hemodynamic index values, the proposed approach enables users to focus first on the most critical adjustments, thereby improving both efficiency and diagnostic precision.

A first aspect of the present invention relates to a computer-implemented method for prioritizing lumen contour adjustments in coronary hemodynamic index computations. The method comprises a step of receiving angiographic image data representing a coronary vessel. Based on this data, a lumen contour is determined using an automated or semi-automated segmentation process. This contour represents the vessel's inner boundary and serves as the basis for further analysis. To refine the accuracy of the segmentation, candidate portions of the lumen contour are identified for potential editing. This selection is based either on an uncertainty measure associated with the segmentation process or on user input indicating regions that require adjustment. For each candidate portion, an impact score is determined, which represents the estimated influence of modifying that portion on the computed coronary hemodynamic index value. The impact score is obtained by analyzing multiple variations of the lumen contour adjustment and quantifying how these variations affect the computed coronary hemodynamic index value. After the impact scores are assigned, the method proceeds with ranking the candidate portions according to their respective impact scores. This results in a prioritized list of editing candidates, allowing users to focus on the most relevant adjustments first. Finally, the prioritized list is provided to the user via a graphical user interface (GUI). The user can then review and modify the suggested contour adjustments, ensuring that their corrections are efficiently directed towards the most diagnostically relevant regions.

A second aspect of the present invention relates to a device for prioritizing lumen contour adjustments in coronary hemodynamic index computations. The device comprises an input unit that is configured to receive angiographic image data representing a coronary vessel, which serves as the basis for segmentation and further analysis. A processing unit executes the computational steps required to identify and prioritize contour adjustments. Specifically, the processing unit determines a lumen contour in the angiographic image data using an automated or semi-automated segmentation approach and identifies candidate portions of the lumen contour that may require editing, either based on an uncertainty measure associated with the segmentation or on user input. For each candidate portion, the device computes an impact score by analyzing multiple variations of the lumen contour adjustment, wherein the impact score quantifies the estimated influence of modifying the respective candidate portion on the computed coronary hemodynamic index value. Based on these scores, the candidate portions are ranked to generate a prioritized list of editing candidates. The device further comprises an output unit, which provides the prioritized list to the user via a graphical user interface. This allows the user to review and refine the suggested contour adjustments, ensuring that manual modifications are focused on the most diagnostically relevant regions.

A third aspect of the present invention relates to a medical system for coronary assessment, which comprises an imaging unit configured to acquire angiographic image data representing a coronary vessel and a device according to the second aspect.

The imaging unit serves as the data acquisition component of the system, providing high-resolution angiographic images that are subsequently processed by the inventive device. By integrating the inventive device into a medical system, the automated prioritization of lumen contour adjustments can be seamlessly incorporated into existing diagnostic workflows. This ensures that critical contour modifications are identified and presented to the user in a structured and efficient manner, allowing for improved diagnostic accuracy and reduced manual effort.

The medical system enables real-time or near-real-time analysis of coronary vessel structures and ensures that the prioritization of adjustments is performed in direct conjunction with the image acquisition process. By embedding the prioritization framework into a larger medical environment, the invention allows for an optimized interaction between automated analysis and expert-based review, further enhancing the efficiency of clinical decision-making.

An embodiment of the invention concerns techniques for prioritizing contour adjustments of segmented lumen structures based on uncertainty measures and their estimated influence on fractional flow reserve (FFR) computations.

The present invention is based on the finding that imaging techniques used in coronary assessment may introduce uncertainties in lumen segmentation. These uncertainties arise due to factors such as image noise, motion artifacts, or contrast variations, leading to inaccuracies in the delineation of vascular structures. Since segmentation results serve as the basis for further computational analyses, in particular computations of coronary hemodynamic index values, including fractional flow reserve (FFR) computations, such inaccuracies can necessitate manual post-processing to refine the lumen contours. However, manual refinement is time-consuming, resource-intensive, and may not always be necessary for clinically insignificant deviations.

Given these challenges, it would be desirable to focus manual corrections only on those segments where an adjustment has a meaningful impact on diagnostic results. The present invention addresses this issue by providing an automated system that evaluates the uncertainty of lumen segmentation and estimates the potential benefit of a correction at each identified location. Based on this evaluation, the system generates a prioritized recommendation for contour adjustments, directing expert attention to the most relevant regions.

The inventive approach enables a systematic ranking of contour modification candidates based on their potential to affect coronary hemodynamic index computations, ensuring that clinical resources are allocated efficiently. By integrating an impact-aware prioritization mechanism, the invention reduces the workload of expert users, minimizes unnecessary refinements, and enhances diagnostic precision.

The present invention is designed for use with angiographic image data representing coronary vessels. These image data are typically obtained through X-ray coronary angiography, a widely used imaging modality in interventional cardiology. In this technique, a contrast agent is injected into the coronary arteries, and X-ray images are acquired in rapid succession to visualize blood flow and vessel morphology.

In many cases, angiographic data are captured as single-plane or biplane X-ray fluoroscopy sequences, providing dynamic views of the coronary vasculature. The resulting image sequences may be processed to reconstruct a 3D coronary model using stereoscopic reconstruction or deep-learning-based methods. However, the invention is not limited to 3D processing and can also be applied in 2D angiographic analysis, where lumen contours are directly segmented from individual frames.

While the invention primarily targets angiographic image data, it may also be applicable to other imaging modalities used for coronary assessment, such as intravascular ultrasound (IVUS) or optical coherence tomography (OCT). These alternative imaging techniques provide cross-sectional views of the vessel lumen and may complement angiographic analysis by refining segmentation accuracy. The system may process such data independently or in combination with angiographic images to improve contour identification and prioritization.

The input image data can be acquired in real-time during an interventional procedure in the catheterization lab (online processing) or retrieved from a previously recorded dataset (offline processing). Depending on the available computational resources and clinical workflow, the invention can be integrated into different stages of the diagnostic process.

In the context of the present invention, the term lumen contour refers to the boundary of the blood-filled space within a coronary artery, as extracted from angiographic image data. This contour represents the inner vessel wall and is a key structure in computational analyses of coronary physiology, including fractional flow reserve estimation.

The lumen contour is typically determined through segmentation algorithms, which may be based on traditional image processing techniques (e.g., edge detection, intensity thresholding) or deep learning models trained on angiographic datasets. Depending on the segmentation method and image quality, the extracted contour may exhibit local inaccuracies or variations, leading to uncertainties that require further refinement.

It is important to note that the lumen contour, as used in this invention, does not necessarily correspond to a medial centerline representation of the vessel. Instead, it follows the detected inner wall boundaries, capturing potential stenoses, irregularities, or changes in vessel morphology. The accuracy of this contour is critical for downstream calculations, as even small deviations in stenotic regions can lead to significant variations in computed coronary hemodynamic index values, for example FFR values.

The invention provides mechanisms to assess uncertainty in the segmented lumen contour and prioritize adjustments based on their clinical relevance. This ensures that manual corrections are directed towards regions where segmentation errors have the highest impact on diagnostic outcomes.

In the context of the present invention, the term uncertainty measure refers to a metric that quantifies the confidence or reliability of a segmented lumen contour in angiographic image data. Uncertainty in segmentation can arise due to factors such as image noise, motion artifacts, or limitations in the segmentation algorithm. The uncertainty measure serves as a basis for identifying candidate portions of the lumen contour that may require refinement.

Rather than requiring users to manually inspect the entire vessel structure, the invention utilizes this measure to pre-select regions where adjustments are most likely to improve the accuracy of the computed coronary hemodynamic index value. The uncertainty measure allows the system to distinguish between high-confidence and low-confidence regions, ensuring that correction efforts are focused on the most diagnostically relevant areas.

The term candidate portions of the lumen contour refers to specific regions along the segmented lumen contour that have been identified as potential targets for manual or automated refinement. These portions represent areas where the segmentation may be uncertain or inaccurate, and where adjustments could improve the reliability of computed fractional flow reserve values.

Candidate portions can be identified based on an uncertainty measure, which provides a systematic approach for detecting regions with low segmentation confidence. Alternatively, they may be selected based on user input, allowing an expert to manually mark areas that require correction.

Not all uncertain regions necessarily require modification. The invention takes into account not only the presence of uncertainty but also the potential diagnostic impact of correcting a given region. Candidate portions are therefore prioritized based on their estimated influence on the coronary hemodynamic index computation, ensuring that user effort is directed toward the most relevant adjustments.

By intelligently selecting candidate portions, the system reduces the burden of manual review, focusing expert attention on areas where adjustments are most likely to improve diagnostic accuracy while minimizing unnecessary modifications.

The term impact score refers to a numerical or categorical value that quantifies the expected influence of modifying a candidate portion of the lumen contour on the computed fractional flow reserve value. This score allows the system to prioritize contour adjustments based on their potential diagnostic relevance, ensuring that user effort is focused on the most meaningful corrections.

The impact score is determined by analyzing multiple variations of a candidate portion's contour, simulating potential adjustments, and evaluating the resulting changes in the computed coronary hemodynamic index value. The magnitude of these changes provides an estimate of how strongly an adjustment in that region affects the overall diagnostic outcome. In some cases, a candidate portion may exhibit high segmentation uncertainty but have little effect on the computed coronary hemodynamic index value, making its correction less relevant. Conversely, even small modifications in critical stenotic regions may significantly alter the coronary hemodynamic index computation, leading to a high impact score.

By incorporating the impact score into the prioritization framework, the invention ensures that the most influential adjustments are suggested first. This targeted correction process improves both workflow efficiency and diagnostic accuracy, reducing unnecessary refinements while ensuring that clinically significant modifications are performed when needed.

In an embodiment of the invention, the process of determining the impact score involves analyzing multiple variations of the lumen contour adjustment and quantifying the resulting changes in the computed fractional flow reserve value.

This process systematically introduces controlled variations to the candidate portions of the lumen contour and re-evaluates the corresponding coronary hemodynamic index value. By observing the fluctuations in the computed coronary hemodynamic index across these variations, the system estimates how sensitive the final diagnostic result is to modifications in the selected region. The magnitude of these changes directly correlates with the impact score, allowing the system to rank editing candidates based on their expected diagnostic relevance.

By incorporating such a structured analysis of variations, this embodiment ensures that the prioritization process remains data-driven and objective, rather than relying solely on static uncertainty measurements. This approach enhances the reliability of the ranking system by focusing on the actual effect of contour modifications rather than purely theoretical uncertainty metrics.

In an embodiment of the invention, candidate portions of the lumen contour are identified based on an uncertainty measure, which serves as an indicator of segmentation reliability. This uncertainty measure can be derived using various approaches. One possible method involves multi-frame segmentation aggregation, in which lumen contours are extracted from multiple angiographic images, and variations between segmentation results are analyzed to estimate uncertainty. Another approach utilizes machine-learning-based predictions, where a trained model, based on precomputed training data, estimates the segmentation uncertainty by recognizing patterns indicative of low-confidence regions. Additionally, uncertainty can be inferred through local geometric feature analysis, where abrupt changes in lumen curvature or discontinuities in the segmentation are detected as indicators of potential inaccuracies.

By employing one or more of these techniques, the invention ensures that candidate portions are selected systematically rather than arbitrarily. This targeted selection process enables a more refined prioritization of editing candidates, allowing for an efficient allocation of correction efforts to regions where adjustments are most likely to improve diagnostic accuracy.

In an embodiment of the invention, the determination of the impact score does not only consider individual candidate portions in isolation but also accounts for interdependencies between multiple contour adjustments. In certain cases, modifying one segment of the lumen contour may alter the hemodynamic properties of the entire vessel, thereby influencing the computed fractional flow reserve value beyond the effect of a single localized change. To address this, the system jointly evaluates multiple candidate portions when determining the impact score.

By incorporating such a joint evaluation, the system can capture combined influences that arise when multiple modifications interact within the computational model. For example, a proximal narrowing might initially appear to have a limited effect on the coronary hemodynamic index value due to an underestimated distal stenosis. However, once the proximal segment is corrected, the hemodynamic impact of the distal stenosis could increase significantly. The impact score, therefore, reflects the total influence of jointly evaluated contour adjustments rather than treating each modification as an independent event.

This approach enhances the accuracy of the prioritization framework by ensuring that critical regions are not overlooked due to isolated assessments. By considering interdependencies, the invention allows for more precise ranking of candidate portions, directing correction efforts toward areas where cumulative modifications have the most significant impact on the diagnostic outcome.

In an embodiment of the invention, the determination of the impact score is applied to various coronary hemodynamic indices. These indices provide different perspectives on coronary physiology and can be used to assess vascular function under varying physiological conditions. The invention therefore allows the impact score to be determined for at least one coronary hemodynamic index selected from fractional flow reserve (FFR), instantaneous wave-free ratio (iFR), resting distal pressure to aortic pressure ratio (rest Pd/Pa), coronary flow reserve (CFR), and index of microvascular resistance (IMR).

By incorporating multiple hemodynamic indices, the invention expands its applicability beyond FFR-based assessments, with FFR being the most widely used coronary hemodynamic index. While FFR is widely used in clinical practice to evaluate the functional significance of coronary stenoses under hyperemic conditions, other indices such as iFR and rest Pd/Pa provide similar insights without requiring pharmacologically induced vasodilation. CFR, on the other hand, measures the ratio of maximal blood flow to resting blood flow, reflecting the overall capacity of the coronary circulation, while IMR provides an estimate of microvascular resistance. Depending on the clinical context, the system can be configured to prioritize lumen contour adjustments based on the most relevant index for a given patient case.

This flexibility ensures that the prioritization method remains adaptable to different diagnostic approaches, allowing for optimized assessment of coronary physiology regardless of the specific hemodynamic metric used.

In an embodiment of the invention, the determination of the impact score is performed dynamically by applying multiple variations of the lumen contour and computing the corresponding coronary hemodynamic index values in real time. These variations represent potential contour adjustments and are used to assess how sensitive the coronary hemodynamic index computation is to modifications in the segmented lumen contour.

The variations can be generated in different ways. One approach involves random perturbations, where contour modifications are introduced within a range defined by the uncertainty measure. This allows for a probabilistic estimation of the impact of small, localized adjustments. Alternatively, predefined systematic modifications may be applied, including controlled shifting, scaling, or smoothing of contour segments to explore the influence of structured changes. Additionally, variations may be algorithmically optimized, meaning they are generated using an optimization process that seeks to maximize the variance in the computed coronary hemodynamic index values, ensuring that the most impactful modifications are captured.

For each variation, an coronary hemodynamic index value is computed, and the impact score is derived based on the variance of the computed coronary hemodynamic index values across all generated contour adjustments. A high variance indicates that modifications in the given region significantly influence the diagnostic outcome, whereas a low variance suggests that adjustments in that area have minimal effect.

By continuously evaluating and updating the impact score in real time, this online approach enables an adaptive and data-driven prioritization of contour corrections. This ensures that the most diagnostically relevant regions are identified and ranked dynamically, improving both efficiency and accuracy in the review process.

In an embodiment of the invention, the determination of the impact score is performed using a pre-trained machine learning model, which allows for the estimation of the impact of contour modifications without requiring real-time coronary hemodynamic index computations. This approach significantly reduces computational demands while still providing a reliable ranking of contour adjustments based on their expected influence on the diagnostic outcome.

Unlike the online variant, where impact scores are calculated dynamically through repeated coronary hemodynamic index computations for different contour variations, the offline variant leverages a machine learning model that has been trained on a large dataset of previously analyzed cases. This model can predict the expected variance in coronary hemodynamic index values based on learned patterns, enabling an efficient and computationally inexpensive assessment of impact scores.

By using a pre-trained model, the system can provide immediate prioritization of contour adjustments, making it particularly suitable for applications where real-time computations would be too resource-intensive. The offline variant can operate independently or in combination with the online variant, depending on the available computational resources and the desired accuracy of impact assessment. For instance, the offline model may be used to generate an initial prioritization, which can then be refined using real-time computations in selected high-priority regions. This combination of offline and online processing ensures that the system remains adaptable to different clinical environments, balancing computational efficiency with diagnostic accuracy.

In an embodiment of the invention, the method further comprises a training step, in which a machine learning model is trained to predict the impact score for contour modifications. The training process ensures that the model can reliably estimate the influence of adjustments on the computed fractional flow reserve value, without requiring direct real-time computations.

To train the model, a plurality of training samples is provided, each containing a lumen contour along with associated data relevant to the prediction of impact scores. These training samples are derived from real patient data, synthetic angiographic data, or a combination of both, allowing the model to learn from a diverse dataset. For each training sample, an impact score is either computed through direct analysis or assigned based on predefined criteria. The machine learning model is then trained using these labeled samples, enabling it to generalize and predict impact scores for new, previously unseen lumen contours.

By incorporating this training process, the system ensures that the impact score estimation in the offline variant remains robust and accurate. A well-trained model can provide instantaneous prioritization of contour adjustments, significantly reducing computational costs while maintaining high diagnostic reliability. Additionally, the training approach allows for continuous improvements, as new data can be integrated into the model to refine its predictive accuracy over time.

In an embodiment of the invention, the determination of the impact score is further refined by incorporating information from previously performed lumen contour adjustments. This adaptation process enables the system to learn from past corrections, ensuring that future prioritizations are more aligned with expert preferences and real-world correction patterns.

The adaptation is based on the analysis of historical user corrections, which are stored in a database and used to refine both the uncertainty measure and the impact score prediction. By evaluating how experts have adjusted lumen contours in prior cases, the system can identify recurring patterns in manual refinements and adjust its prioritization accordingly. If certain types of adjustments consistently lead to significant changes in computed coronary hemodynamic index values, the system can assign higher impact scores to similar cases in the future. Conversely, if historical data show that certain uncertainties frequently result in minor or negligible coronary hemodynamic index variations, the model can down-rank those regions to avoid unnecessary corrections.

By integrating historical correction data, the invention enhances the adaptability of the prioritization system, allowing it to evolve over time based on real-world user interactions. This ensures that the ranking of contour adjustments remains dynamic, improving both efficiency and accuracy in clinical workflows.

In an embodiment of the invention, the method further comprises a classification step, in which a region of a coronary lumen is assigned to a category based on a coronary hemodynamic index. This classification is performed using one or more predefined threshold values, allowing for an objective assessment of whether a given region is considered functionally significant or not.

The classification influences the determination of the impact score, as the system evaluates whether a modification of the lumen contour causes a transition between classification categories. If a contour adjustment results in a shift from one diagnostic category to another - such as from a non-significant stenosis to a significant one - this transition is reflected in an adjusted impact score. In contrast, modifications that do not affect the classification may be assigned a lower impact score, as they are less likely to alter clinical decision-making.

A particularly relevant example is the use of predefined threshold values for coronary hemodynamic indices, which define whether a stenosis is classified as functionally significant or not. If a modification of the lumen contour leads to a transition across such a threshold, the corresponding impact score is weighted more strongly than for cases where the coronary hemodynamic index remains within the same diagnostic category before and after the modification. This ensures that modifications with the potential to alter clinical conclusions are prioritized over changes that, while numerically relevant, do not affect the classification outcome.

By incorporating this classification-based adjustment, the invention ensures that prioritization is not solely dependent on absolute changes in hemodynamic values but also takes into account whether those changes affect the diagnostic outcome. This refinement further enhances the efficiency of the prioritization framework by directing correction efforts to regions where modifications have the greatest clinical relevance.

In an embodiment of the invention, the device further comprises a storage unit and a processing unit, which are used to facilitate the training of a machine learning model for predicting the impact score of lumen contour adjustments.

The storage unit is configured to store and provide training data, ensuring that relevant datasets are accessible for the training process. These training datasets can include real patient data, synthetic angiographic data, or a combination thereof, enabling the machine learning model to generalize effectively across different types of input data.

The processing unit is responsible for generating training samples, which include lumen contours along with associated impact scores. It further computes or assigns impact scores for these training samples, using either direct coronary hemodynamic index computations or predefined criteria. Once the labeled training data are prepared, the processing unit is used to train the machine learning model, allowing it to predict impact scores for new cases based on learned patterns.

By incorporating both a dedicated storage unit and a processing unit for model training, the invention ensures that the machine learning framework can be continuously refined and adapted to new data, improving the accuracy and efficiency of impact score predictions over time.

The extraction and segmentation of coronary artery lumen from angiographic images are essential steps in computational assessments such as minimal lumen diameter measurements, stenosis severity estimations, and fractional flow reserve (FFR) computations. However, medical imaging techniques inherently introduce uncertainties due to factors such as image noise, motion artifacts, and variations in vessel contrast. As a result, automatically or semiautomatically generated lumen contours often exhibit inaccuracies that require further refinement.

In current clinical workflows, these refinements are typically performed manually by experts who review and adjust the segmented lumen contours to ensure diagnostic accuracy. This process is highly time-consuming and labor-intensive, as it requires detailed inspection of the entire lumen structure to identify and correct potential inaccuracies. The need for manual adjustments significantly prolongs the overall examination time and can delay the generation of a final clinical report, which is particularly critical in time-sensitive procedures such as coronary assessments.

Beyond the direct impact on diagnostic efficiency, prolonged segmentation refinement times also increase operational costs and limit the availability of imaging resources. The extended time required for expert review reduces the number of patients that can be examined within a given timeframe and may lead to scheduling delays for subsequent examinations. In busy clinical environments, this creates bottlenecks in diagnostic workflows, ultimately affecting patient throughput and resource allocation.

Existing methods for segmentation refinement provide only limited guidance to users regarding which areas of the lumen contour require correction. Some approaches visualize segmentation uncertainty through confidence maps or color-coded overlays, but these techniques merely highlight uncertain areas without prioritizing them based on clinical relevance. Users must still manually evaluate all flagged regions without knowing which corrections are most impactful for the final diagnostic result.

The proposed system is capable of identifying uncertain regions that have a clinically significant effect on the computation of coronary hemodynamic index values, allowing users to allocate their time more effectively. By directing attention to the most critical areas, the time required for manual review and adjustment can be minimized, leading to a reduction in the overall examination duration and an optimization of resource utilization in clinical workflows. This, in turn, enables a higher patient throughput while ensuring that corrections contribute meaningfully to diagnostic accuracy rather than refining contours that have negligible impact on the final assessment.

Existing methods often encounter difficulties in distinguishing between uncertainty that is relevant for clinical decision-making and uncertainty that has minimal influence on the diagnostic result. As a consequence, users may spend considerable effort correcting contour regions that do not substantially affect the computed coronary hemodynamic index value while potentially overlooking areas where adjustments could significantly alter the diagnostic outcome.

Where appropriate, the above-mentioned configurations and developments and implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

The present invention is described in greater detail in the following on the basis of the embodiments shown in the schematic figures of the drawings, in which:
- Fig. 1: shows a schematic overview of the system architecture, illustrating the key components involved in acquiring, processing, and analyzing angiographic image data;
- Fig. 2: shows an example of a vascular structure with candidate portions identified for lumen contour adjustment, including multiple variations used to determine the impact score;
- Fig. 3: shows a graphical user interface displaying angiographic image data, identified candidate portions, and a prioritized list for user interaction; and
- Fig. 4: shows a process flow diagram outlining the method for prioritizing lumen contour adjustments, including the key processing steps performed by the system.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

For better illustration, and if not stated otherwise, the embodiments of the inventions are described with regard to fractional flow reserve FFR computation, without limiting the invention to computation of this specific coronary hemodynamic index. FFR is used as an example of a coronary hemodynamic index, the described embodiments can be used for computation of other coronary hemodynamic indices, in particular a coronary hemodynamic index selected from instantaneous wave-free ratio (iFR), resting distal pressure to aortic pressure ratio (rest Pd/Pa), coronary flow reserve (CFR), and index of microvascular resistance (IMR).

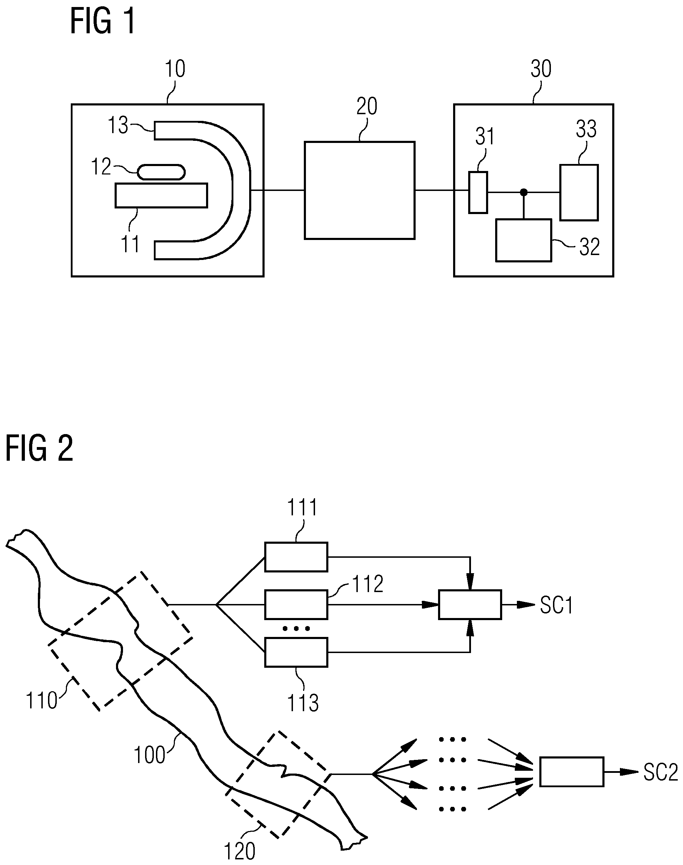

Figure 1 schematically illustrates an exemplary system architecture for prioritizing lumen contour adjustments in fractional flow reserve FFR computation. The system comprises an imaging unit 10 for acquiring angiographic image data, a preprocessing unit 20 for enhancing and preparing the image data, and a device 30 configured to analyze the lumen contours and generate a prioritized list of editing candidates.

The imaging unit 10 includes an angiographic examination table 11, on which a patient 12 is positioned during the procedure. A radiographic system 13 with a C-arm is used to acquire X-ray images of the coronary arteries, which are essential for assessing the presence and severity of coronary artery disease (CAD). These arteries supply oxygen-rich blood to the heart, and any narrowing, or stenosis, can significantly impact cardiac function.

The acquired image data are transmitted to the preprocessing unit 20, which performs various enhancement operations to optimize the images for further analysis. These preprocessing steps may include techniques such as noise reduction, contrast enhancement, and segmentation refinement. Depending on the imaging protocol and clinical requirements, the image data may consist of individual X-ray images or entire sequences. Analyzing multiple frames in a sequence can improve accuracy by compensating for motion artifacts and providing a more comprehensive view of the coronary anatomy.

Accurate assessment of the lumen contour is critical for determining the severity of stenoses and computing fractional flow reserve (FFR), which provides a functional evaluation of blood flow restrictions. However, several factors can introduce uncertainty in the lumen contour determination. Variations in image quality, such as noise and contrast limitations, can affect segmentation accuracy. In some cases, parts of a vessel may be partially obscured due to overlapping arteries or calcifications, making it difficult to extract a clear lumen contour. The appearance of vessel segments may also be distorted depending on the perspective from which the image was captured, leading to inaccurate contour estimations. Additionally, motion artifacts caused by patient movement or cardiac motion can further complicate the segmentation process.

The input unit 31 of the device 30 receives the preprocessed angiographic image data and provides it to the graphical user interface 33, where the image is displayed to the user. At this stage, the image primarily serves as a visual representation of the coronary vessel anatomy, enabling the user to inspect the acquired data before any further computational processing is applied. The initial display does not yet include any segmentation overlays or uncertainty indicators, ensuring that the original image remains available for review in its unaltered form.

Although angiographic imaging provides a powerful tool for assessing coronary anatomy, the presence of uncertainties in the extracted lumen contour can pose a challenge for accurate diagnosis. These uncertainties arise from various factors, including image noise, vessel overlap, and perspective-related distortions, as described earlier. In clinical practice, the process of addressing such uncertainties is typically performed manually, requiring an expert user to review the image and make corrections as needed.

To assist in this process, existing software solutions may incorporate automatic or semiautomatic tools that attempt to highlight areas of potential segmentation uncertainty. These tools analyze variations in contour detection and use predefined criteria to mark regions where inconsistencies may be present. Alternatively, some systems allow users to manually select regions they consider uncertain based on their own clinical judgment. Regardless of whether uncertainties are identified automatically or manually, the process of reviewing and adjusting contour segments remains time-consuming and can significantly delay the final diagnosis.

Given the complexity and effort involved in this manual correction process, the present invention aims to optimize uncertainty handling by identifying the most critical uncertainties. Rather than presenting the user with all potential uncertainty regions, the system evaluates which uncertainties are most relevant to the final diagnostic outcome and prioritizes those for correction. This approach ensures that the user can focus on the modifications that offer the greatest improvement potential while reducing unnecessary effort.

Once the angiographic image data has been received and displayed, the processing unit 32 performs an automated analysis of the lumen contour within the displayed image. The contour is initially determined based on an automated or semi-automated segmentation process, which extracts the vessel boundaries from the image. This segmentation serves as the basis for further refinement and uncertainty assessment.

To ensure that only the most relevant areas are considered for potential corrections, the system identifies candidate portions of the lumen contour that may require editing. These candidates are determined either based on a precomputed uncertainty measure, which evaluates the confidence in the segmentation accuracy, or through manual selection by the user.

For each identified candidate, the system calculates an impact score that estimates the degree to which modifying that particular region would influence the final computed fractional flow reserve (FFR) value. The impact score is represented as a numerical value within a predefined range, such as between 0 and 1, 0 and 255, or another suitable scale. A higher impact score indicates that an adjustment in the corresponding region is expected to have a greater effect on the final diagnostic result, whereas a lower impact score suggests that modifications in that region may have only a minor influence.

The score is computed by generating multiple variations of the contour adjustment and analyzing how these variations affect the computed FFR outcome. Based on these calculations, the system generates a prioritized list of editing candidates, ranking the candidate portions according to their respective impact scores.

The prioritized list is then presented to the user via the graphical user interface 33, allowing the user to focus on modifications that are expected to have the most significant effect on the diagnostic result.

In an online variant, the system directly utilizes fractional flow reserve computation to assess the effect of modifying specific candidate portions of the lumen contour. For each candidate, multiple variations of the contour are generated, and the resulting impact on the computed FFR value is analyzed. This approach allows for the direct evaluation of how strongly a contour adjustment influences the diagnostic outcome, ensuring that only the most relevant modifications are prioritized.

The process begins by selecting a candidate portion, identified either through an uncertainty measure or manual user selection. Once a candidate is chosen, the system generates multiple variations of its contour. These variations can be produced using different methods, including random perturbations, where slight contour adjustments are applied within a predefined uncertainty range, or systematic modifications, such as shifting, scaling, or smoothing of contour segments. Additionally, algorithmically optimized modifications can be used to maximize the variance in the computed FFR values. The number of variations applied can be adjusted dynamically based on image properties, available computational resources, or user-defined parameters.

For each generated variation, the system computes an FFR value and records the resulting change. By analyzing the variance across all computed values, an impact score is determined, quantifying how much an adjustment to this candidate portion is expected to influence the overall FFR outcome. This process is repeated for all identified candidates, generating a prioritized list of editing candidates ranked according to their respective impact scores.

The user may interact with the system via the graphical user interface 33 to refine the analysis. The system can be configured to evaluate all identified candidates, focus on high-uncertainty regions, or allow the user to manually select a subset of candidates for evaluation. Once the prioritized list is generated, the system presents it to the user, allowing them to focus on the modifications with the highest expected impact on the final diagnostic outcome.

Figure 2 schematically illustrates the evaluation process of candidate portions of a lumen contour based on the approach described above. The coronary vessel 100 contains two identified candidate portions, 110 and 120, representing regions where segmentation uncertainties have been detected or manual corrections are considered.

For each candidate portion, multiple variations are generated and evaluated to determine their influence on the computed FFR value. In the first candidate 110, three variations, 111, 112, and 113, are applied, each representing a possible adjustment to the contour. The system then computes the corresponding FFR values, analyzes the changes, and determines an impact score SC1 for the first candidate. A similar process is applied to the second candidate 120, where multiple variations are introduced, and an impact score SC2 is computed.

While Figure 2 illustrates only two candidate portions 110, 120 and three variations per candidate, this representation is merely an example. The actual number of candidates and variations may vary depending on the specific application and computational constraints.

In contrast to the online variant, which computes FFR values on-the-fly for each contour variation, an offline variant may rely on a pretrained machine learning model to predict impact scores directly. This approach significantly reduces the computational burden and enables faster prioritization of editing candidates, making it particularly advantageous in time-sensitive clinical settings.

To train the model, a large dataset of annotated lumen contours is collected, which may include real patient data, synthetic angiographic data, or a combination of both. Editing candidates are identified based on uncertainty measures, manual annotations, or randomized sampling along the contour. For each candidate, an impact score is computed using a methodology similar to the online variant, where variations are applied and their effect on computed FFR values is analyzed. The training process then involves learning the relationship between contour features, uncertainty metrics, and impact scores, allowing the model to predict the expected influence of a contour adjustment without requiring explicit FFR computations.

Once trained, the model can be deployed in real-time applications, where it predicts an impact score for each candidate region based on its learned patterns. This allows the system to generate a prioritized list of editing candidates much faster than in the online variant, while still maintaining high accuracy. The offline approach can be used independently or in combination with the online variant. In a hybrid system, the machine learning model provides an initial estimation of the impact scores, which can then be refined through selective FFR computations for the most relevant candidates, balancing speed and precision.

To enable the offline variant, the machine learning model must first be trained using a dataset that represents a wide range of possible lumen contour variations and their associated impact scores. The training data consists of lumen contours extracted from real patient angiographic images, synthetic datasets, or a combination of both. Each dataset sample includes one or more candidate portions of the lumen contour, which are identified based on uncertainty measures, manual annotations, or randomized selection along the contour.

For each candidate, the system generates multiple contour variations, similar to the approach used in the online variant, and evaluates their influence on the computed FFR value. These evaluations provide ground truth impact scores, which are stored alongside the contour data. The machine learning model is then trained to learn the relationship between geometric features of the contour, segmentation uncertainty, and the resulting impact score.

During training, the model refines its ability to predict impact scores based on new, unseen contour data, without requiring direct FFR computations. This allows the system to approximate the expected impact of a contour adjustment based purely on learned patterns, significantly reducing computational overhead compared to the online approach.

Once trained, the model is deployed within the offline variant to predict impact scores in real-time. When a new angiographic image is processed, the model receives lumen contour data and candidate portion information, then outputs predicted impact scores, which are used to generate a prioritized list of editing candidates.

The effectiveness of the trained model depends on the quality and diversity of the training data. Therefore, training datasets can be periodically updated with new real-world cases to improve performance. Additionally, the model may incorporate feedback from previous user corrections, allowing it to continuously refine its prioritization strategy.

While the online and offline variants of the system offer distinct advantages, they are not mutually exclusive. Instead, they can be strategically combined to balance computational efficiency with diagnostic accuracy. The combination of both approaches allows the system to benefit from the speed of the offline variant while retaining the high precision of the online variant for critical cases.

In one possible implementation, the offline model is used as a first step to generate an initial prioritized list of editing candidates based on predicted impact scores. Since the offline variant does not require direct FFR computations, this step can be performed rapidly. Once the list is generated, the highest-ranked candidates can be further analyzed using the online variant, where direct FFR computations validate and refine the estimated impact scores. This ensures that high-priority corrections are evaluated with maximum accuracy, while lower-priority candidates are still prioritized based on the precomputed offline predictions.

An alternative strategy involves dynamically adjusting the balance between online and offline processing based on system constraints. In settings with limited computational resources, the system may rely more heavily on the offline variant, whereas in scenarios where real-time precision is critical, a larger fraction of candidates may be evaluated using the online method.

In addition to prioritizing candidates, the system can also continuously improve its offline model by incorporating feedback from online evaluations. If discrepancies are observed between predicted impact scores (offline) and actual computed values (online), this data can be used to refine the training set for future iterations, leading to a more accurate offline model over time.

This adaptive hybrid approach provides flexibility, ensuring that computational constraints, diagnostic requirements, and system efficiency are optimally balanced.

In addition to prioritizing lumen contour adjustments based on uncertainty and impact scores, the system can further enhance its performance by learning from previously performed corrections. This approach allows the system to adapt over time, improving both the offline impact assessment model and the overall prioritization strategy.

Whenever a user modifies a candidate portion of a lumen contour, the system stores the original contour, the adjustment made, and the resulting impact on the computed FFR value. By aggregating such data across multiple cases, a historical correction database is built, capturing patterns in common segmentation errors, user preferences, and typical impact score distributions. The stored data can be utilized to refine the uncertainty measure, enhance the impact score prediction, and adapt the prioritization rules. If certain regions are frequently corrected in similar ways, the system can adjust its uncertainty estimation to reflect these recurring trends, improving candidate selection in future cases. The machine learning model used in the offline variant can incorporate historical user corrections to better estimate the actual influence of contour modifications on FFR calculations. The system can also recognize if users consistently focus on specific anatomical regions or types of segmentation issues, allowing it to dynamically refine how candidates are ranked.

By leveraging past corrections, the system effectively moves toward an adaptive improvement cycle, where each user interaction contributes to a continuously optimized prioritization process. This ensures that over time, the accuracy and efficiency of lumen contour adjustments improve, reducing the need for manual interventions and streamlining the workflow for clinicians.

In some implementations, the computed FFR value is assigned to a diagnostic category or class based on predefined threshold values. These classification thresholds may be determined based on clinical guidelines or specific diagnostic criteria.

The impact score calculation may take into account whether a contour modification causes the FFR value to transition from one class to another. For example, if an FFR value is initially below a critical threshold, such as 0.8, and a contour adjustment results in a value above this threshold, the classification of the coronary lesion may change from a clinically significant stenosis to a non-significant one. Conversely, a modification that shifts the FFR value from above the threshold to below may also have significant diagnostic implications.

To reflect this clinical relevance, the system may assign a higher impact score to modifications that could lead to such classification transitions. The threshold of 0.8 is a commonly used value in clinical practice, but the system may be configured to handle different predefined thresholds depending on the clinical setting. Additionally, the impact score may be weighted more strongly in cases where a modification affects diagnostic decision-making, as opposed to cases where the FFR value remains within the same category before and after adjustment.

By integrating classification-dependent weighting into the impact score computation, the system ensures that the most diagnostically relevant modifications are prioritized, enhancing both clinical efficiency and accuracy.

In addition to evaluating the impact of individual contour modifications in isolation, the system can also consider interdependencies between different candidate portions of the lumen contour. In many cases, the effect of adjusting one candidate portion may not be fully realized until another segment is modified. A candidate portion that initially appears to have a low impact score may become more relevant after a preceding modification has altered the overall flow conditions within the vessel.

For example, if an upstream stenosis is underestimated due to an initially incorrect contour, the corresponding flow resistance in the vessel may be artificially increased. This could lead to a situation where a more distal stenosis appears to have only a minor effect on the computed FFR value. However, once the upstream stenosis is corrected, the distal stenosis may become a more significant factor, as the adjusted flow distribution leads to different pressure conditions downstream. To account for such effects, the system may be configured to analyze modifications not only in isolation but also in combination with other candidate adjustments, allowing for a more comprehensive impact assessment.

In some implementations, the prioritization of editing candidates can be dynamically adjusted as modifications are applied. Rather than treating each candidate as an independent entity, the system may continuously re-evaluate the ranking of remaining candidates to reflect changes in flow conditions, vessel resistance, or contour geometry. This adaptive prioritization strategy can help ensure that clinically significant modifications are not overlooked simply because they initially appeared less relevant. By incorporating such an approach, the system may improve the accuracy of the prioritization process and enable users to focus their attention on the most impactful adjustments at each stage of the review process.

As stated above, the described method is not limited to fractional flow reserve but can also be applied to other coronary hemodynamic indices that provide additional physiological insights into coronary artery disease. Depending on the diagnostic objective, the system may determine impact scores based on different indices, including instantaneous wave-free ratio (iFR), resting distal pressure to aortic pressure ratio (rest Pd/Pa), coronary flow reserve (CFR), and index of microvascular resistance (IMR).

Each of these indices has specific characteristics that influence how contour modifications affect the final diagnostic outcome. While FFR is computed under hyperemic conditions and relies on flow resistance modeling, iFR and rest Pd/Pa operate under resting conditions and may exhibit different sensitivities to contour changes. CFR provides an assessment of coronary flow capacity and can be influenced by both epicardial and microvascular resistance, while IMR is primarily used to evaluate microvascular function.

Due to these differences, the system may adapt its impact score determination based on the selected hemodynamic index. In some implementations, different prioritization strategies may be applied depending on whether the assessment focuses on hyperemic or resting-state indices. Additionally, the interdependencies between contour modifications may vary based on the physiological properties of the selected index. For example, autoregulatory mechanisms in resting-state indices might compensate for some contour adjustments, reducing their overall impact on the diagnostic result.

By supporting multiple coronary hemodynamic indices, the system enables a flexible and clinically relevant approach to prioritizing lumen contour adjustments. This adaptability ensures that the method remains applicable across different diagnostic protocols, providing optimized guidance to clinicians based on the most relevant physiological parameters.

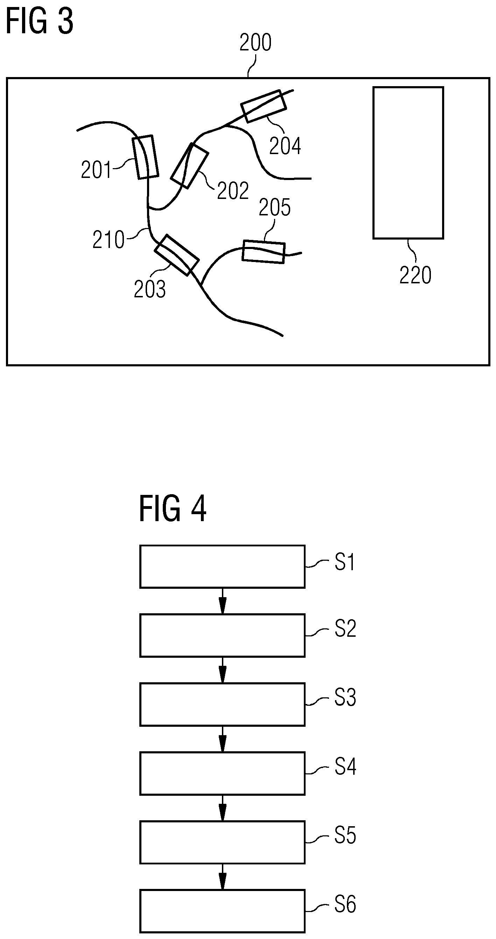

Figure 3 schematically illustrates an exemplary graphical user interface 200 designed to facilitate the review and adjustment of lumen contours within an angiographic image. The central display area presents a vascular structure 210, in which certain candidate portions 201-205 have been identified as uncertain based on predefined uncertainty measures or user input. These candidates may represent areas where contour adjustments could potentially improve the accuracy of the FFR computation.

The system allows the user to interact with the identified candidates using an input device, such as a mouse or touchscreen. The user may manually select one or more candidate portions for analysis, or alternatively, the system may automatically determine a subset of candidates based on predefined selection criteria. The analysis can be performed on individual user-selected candidates, all identified candidates, or an automatically determined group that the system prioritizes.

Once the impact assessment is completed, the system provides visual feedback to indicate the priority of each candidate portion. This may include color-coded highlights, numerical labels, or other graphical markers that reflect the estimated impact score of each candidate. Additionally, or alternatively, the prioritization results can be presented in a structured list 220 displayed alongside the vascular structure. This list provides an ordered ranking of candidate portions, allowing the user to quickly navigate to the most relevant areas for review and potential modification.

The graphical user interface 200 is designed to streamline the lumen contour adjustment process by offering intuitive visualizations and efficient selection mechanisms. This ensures that users can focus their attention on the most critical contour modifications, thereby improving the overall efficiency and accuracy of the diagnostic workflow.

Figure 4 illustrates a schematic process flow of the computer-implemented method for prioritizing lumen contour adjustments as described in the independent claims. The steps of the method are labeled with S1 to S6, corresponding to the primary operations performed by the system. It is understood that the method may be implemented using the previously described device, and that the features of the device and the method may be combined in any suitable manner. Additionally, the method may include further steps that facilitate the execution of functions provided by the device and vice versa.

In step S1, angiographic image data is received, representing a coronary vessel. This data serves as the basis for the subsequent analysis and is typically acquired using an imaging system as described in the previous sections.

In step S2, the lumen contour is determined based on an automated or semi-automated segmentation. The segmentation process may utilize image processing algorithms, machine learning models, or a combination thereof to extract the vessel boundaries.

In step S3, candidate portions of the lumen contour for editing are identified. This can be based on an uncertainty measure, which quantifies segmentation reliability, or on manual user input, where the user directly selects areas of interest. The determination of candidates can involve multi-frame aggregation, machine learning-based uncertainty prediction, or an analysis of geometric features, as previously discussed.

In step S4, an impact score for each candidate portion is determined, e.g. by analyzing multiple variations of the lumen contour adjustment. The impact score represents the estimated influence of modifying the respective candidate portion on the computed FFR value. Depending on the implementation, different approaches can be used, including online computation methods that simulate multiple variations in real time or offline models that rely on pre-trained machine learning predictions.

In step S5, the candidate portions are ranked based on their respective impact scores to generate a prioritized list of editing candidates. This ranking allows the system to direct the user's attention to the most relevant modifications, ensuring efficient and clinically meaningful adjustments.

In step S6, the prioritized list is presented to the user via a graphical user interface. The visualization may include a structured list of candidates, a color-coded display in the angiographic image, or a combination of both. The user can then interact with the prioritized list, selecting areas for review and modification.

The method described herein may be implemented as a computer program product stored on a non-transitory computer-readable storage medium. The computer program comprises instructions that, when executed by one or more processors, cause the processor(s) to perform the steps of the method as described in the preceding sections. The computer-readable storage medium may include, but is not limited to, flash memory, optical disks, solid-state drives, or magnetic storage devices.

The method may be executed on a single processing unit or distributed across multiple processors, depending on the computational requirements and system architecture. In some implementations, the computational tasks related to uncertainty estimation, impact score determination, and ranking may be performed on a dedicated processing unit, while the graphical user interface and user interactions are handled by a separate processing system.

This ensures that the method can be efficiently deployed on different hardware configurations, including standalone workstations, cloud-based processing environments, and integrated medical imaging systems.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

Summarizing, the present invention provides a computer-implemented method and a corresponding device for prioritizing lumen contour adjustments in angiographic image data to improve the accuracy of coronary hemodynamic index computation. The method includes receiving angiographic image data, determining a lumen contour through automated or semi-automated segmentation, and identifying candidate portions for editing based on an uncertainty measure or user input. For each candidate portion, an impact score is determined by analyzing multiple contour variations, quantifying the influence of adjustments on the computed coronary hemodynamic index value. The candidates are ranked based on their impact scores, and the prioritized list is presented to the user via a graphical interface for review and potential modification. The invention enables efficient correction of diagnostically relevant areas while minimizing unnecessary adjustments.

## Claims

1. Computer-implemented method for prioritizing lumen contour adjustments in a coronary hemodynamic index computation system, wherein the method comprises:
receiving (S1) angiographic image data representing a coronary vessel;
determining (S2) a lumen contour in the angiographic image data based on an automated or semi-automated segmentation;
determining (S3) candidate portions of the lumen contour for editing based on an uncertainty measure associated with the segmentation or based on user input;
determining (S4) an impact score for each candidate portion by analyzing multiple variations of the lumen contour adjustment, wherein the impact score represents the estimated influence of an adjustment of the respective candidate portion on a computed coronary hemodynamic index value of a related variation of the lumen contour adjustment;
ranking (S5) the candidate portions based on their respective impact scores to generate a prioritized list of editing candidates; and
providing (S6) the prioritized list to a user via a graphical user interface (200) for review and potential contour adjustments.

2. Method according to claim 1, wherein determining (S4) the impact score comprises analyzing multiple variations of the lumen contour adjustment and quantifying the resulting change in the computed coronary hemodynamic index value.

3. Method according to any of the preceding claims, wherein candidate portions of the lumen contour are identified based on an uncertainty measure and wherein the uncertainty measure being derived from one or more of:
- multi-frame segmentation aggregation, wherein the lumen contour is extracted from multiple angiographic images and variations between segmentations are analyzed,
- a machine-learning-based prediction of segmentation uncertainty, wherein a trained model estimates the uncertainty based on precomputed training data, and
- an analysis of local geometric features, wherein abrupt changes in lumen curvature or discontinuities in the segmentation are detected as uncertainty indicators.

4. Method according to any of the preceding claims, wherein determining (S4) the impact score comprises jointly evaluating multiple candidate portions of the lumen contour to account for interdependencies between contour adjustments, wherein the impact score is determined based on the combined influence of the jointly evaluated contour adjustments on the computed coronary hemodynamic index value.

5. Method according to any of the preceding claims, wherein the coronary hemodynamic index is selected from the group consisting of fractional flow reserve, FFR, instantaneous wave-free ratio, iFR, resting distal pressure to aortic pressure ratio, rest Pd/Pa, coronary flow reserve, CFR, and index of microvascular resistance, IMR.

6. Method according to any of the preceding claims, wherein determining (S4) the impact score comprises:
applying multiple variations of the lumen contour, the variations being selected from one or more of:
- random perturbations within a range determined by the uncertainty measure,
- Predefined systematic modifications, including shifting, scaling, or smoothing of contour segments, and
- algorithmically optimized modifications, wherein variations are generated based on an optimization process aiming to maximize the expected variance of the coronary hemodynamic index values,
computing a coronary hemodynamic index value for each variation, and
determining the impact score based on the variance of the computed coronary hemodynamic index values.

7. Method according to any of the preceding claims, wherein determining (S4) the impact score comprises using a previously trained machine-learning model to predict the impact score.

8. Method according to claim 7, wherein the method further comprises training the machine learning model to predict an impact score, wherein the training further comprises:
providing a plurality of training samples, each including a lumen contour and associated data relevant to impact score prediction,
computing or assigning impact scores for the training samples, and
training the machine learning model based on the training samples to predict impact scores for new lumen contours,
wherein the training samples are obtained from one or more of real patient data, synthetic angiographic data, or a combination thereof.

9. Method according to any of the preceding claims, wherein determining (S4) the impact score further comprises adapting the impact score computation based on previously performed lumen contour adjustments, in particular, wherein the adaptation is based on an analysis of historical user corrections stored in a database and used to refine uncertainty measures or impact score predictions.

10. Method according to any of the preceding claims, further comprising:
classifying a region of a coronary lumen based on a coronary hemodynamic index by assigning the region to a category depending on one or more predefined threshold values,
wherein determining the impact score comprises determining or adjusting the impact score based on whether modifying the lumen contour causes a transition of the classification of the coronary region.

11. Device (30) for prioritizing lumen contour adjustments in a coronary hemodynamic index computation system, in particular by employing a computer-implemented method according to any of the claims 1 - 10, the device comprising:
an input unit (31) configured to receive angiographic image data representing a coronary vessel;
a processing unit (32) configured to:
- determine a lumen contour in the angiographic image data based on an automated or semi-automated segmentation;
- determine candidate portions of the lumen contour for editing based on an uncertainty measure associated with the segmentation or based on user input;
- determine an impact score for each candidate portion by analyzing multiple variations of the lumen contour adjustment, wherein the impact score represents the estimated influence of an adjustment of the respective candidate portion on a computed coronary hemodynamic index value of a related variation of the lumen contour adjustment;
- rank the candidate portions based on their respective impact scores to generate a prioritized list of editing candidates; and
an output unit (33) configured to provide the prioritized list to a user via a graphical user interface (200) for review and potential contour adjustments.

12. Device according to claim 11, further comprising:
a display unit configured to present angiographic image data representing a coronary vessel to a user, wherein the display unit is further configured to indicate candidate portions of the lumen contour for editing based on the prioritized list of editing candidates,
wherein the indication of candidate portions is provided as a structured list of editing candidates ranked based on their respective impact scores and/or by adjusting the visual representation of the candidate portions within the angiographic image data based on the related impact score of the respective candidate portion.

13. Device according to claim 11 or 12, further comprising:
a storage unit configured to store and provide training data for a machine learning model used to predict an impact score for lumen contour adjustments; and
a processing unit configured to generate training samples, compute or assign impact scores for the training samples, and train the machine learning model based on the training samples.

14. Medical system for coronary assessment, the system comprising:
an imaging unit (10) configured to acquire angiographic image data representing a coronary vessel;
a device (30) according to any of claims 11 to 13.

15. Computer program product comprising instructions which, when executed by a processor, cause the processor to carry out the method according to any of claims 1 to 10.
